# EUROPEAN PATENT SPECIFICATION

(11) **EP 4 497 962 B1**
(45) Date of publication and mention of the grant of the patent: **10.09.2025**
(21) Application number: 24191223.7
(22) Date of filing: 26.07.2024
(51) Int. Cl.: F16D 55/02, F16D 55/22, F16D 55/224, F16D 55/226, F16D 55/228, F16D 65/00, F16D 65/04, F16D 65/095, F16D 65/097

(54) **CALIPER BODY AND BRAKE PAD ASSEMBLY**
BREMSSATTEL UND BREMSBELAGANORDNUNG
CORPS D'ÉTRIER ET ENSEMBLE PLAQUETTE DE FREIN

(30) Priority: 27.07.2023 IT 202300015900
(43) Date of publication of application: 29.01.2025
(73) Proprietor: Brembo S.p.A., 24035 Curno (Bergamo) (IT)
(72) Inventor: CRIPPA, CRISTIAN, I-24035 CURNO, BERGAMO (IT); MAMBRETTI, MAURO, I-24035 CURNO, BERGAMO (IT)
(74) Representative: Crippa, Paolo Ernesto

(56) References cited:
- EP-A1- 1 898 114
- EP-A1- 1 963 701
- EP-A1- 3 810 952
- EP-B1- 1 963 701
- EP-B1- 3 810 952
- US-A1- 2017 138 426
- US-A1- 2018 106 313
- US-A1- 2023 108 312
- US-B2- 9 765 832

## Description

### . Field of the invention

**.** The present invention relates to an assembly of caliper body and brake pads.

**.** In addition, the present invention relates to a method of assembling a brake pad to a brake caliper.

### . Background art

**.** In a disc brake, the brake caliper is generally arranged straddling the external peripheral margin of a brake disc, adapted to rotate about a rotation axis (X-X) defining an axial direction (A-A). In a brake disc, there are also defined a radial direction (R-R) substantially orthogonal to said axial direction (A-A), and a circumferential direction (C-C) orthogonal to both said axial direction (A-A) and said radial direction (R-R), as well as a tangential direction (T-T) locally, or rather punctually, i.e., in an intersection point of an axial and a radial direction, orthogonal to both said axial direction (A-A) and said a radial direction (R-R).

**.** Current brake calipers for disc brake exhibit various technical problems related to the presence of pins, typically made of steel, which are screwed or driven into the calipers and are intended to slide and support the pads when a braking action is required.

**.** In particular, there is evidence of breakage and/or slippage of said pins from the appropriate seats due to heavy stresses. Moreover, the presence of such pins causes a general lack of space, usable for example to place efficient masses for improving performance from the NVH point of view, or to place efficient springs for minimizing residual torques, or even to place various types of sensors (e.g., wear indicators). The presence of the aforementioned steel pins also makes the calipers excessively heavy.

**.** Finally, the shape of the current disc brake calipers requires an operator to disassemble the brake caliper itself to perform the pad replacement operation, thus making some brake system maintenance operations difficult and time-demanding.

**.** There are several patent documents describing pin-less disc brake calipers for the sliding of the pads.

**.** For example, patent documents US4200173 and US4823920 describe a floating caliper slidingly supported on pins fixed to an anchor plate, in turn said anchor plate is fixed to a fixed part of the vehicle. Such an anchor plate has two arms which extends axially and support the pad and the pad support plate in a sliding manner by engaging guide grooves made on the pad support plate with guide rails made on said anchor plate.

**.** Moreover, document EP135696 describes a floating caliper, having a bridge provided with an opening defined by a radially arranged edge and two stepped edges circumferentially spaced apart and which extend axially. The document further describes a pad plate having an upper tab provided with pairs of support surfaces or shoulders which support the radially outer portion of the pad on the steps of the aforementioned stepped edges.

**.** Other solutions are known from EP3810952A1, US4498564A**,** US3605956A**,** GB1585159A**,** CN204200914U**,** US4200173A**,** US4823920**,** EP0135696A1**,** US4046233A**,** JP2001323953A**,** GB1506709A**,** EP0248385A1 and FR2517399A1**.**

**.** In particular, GB1585159A shows a disc brake assembly comprising a rotating disc and caliper straddling the peripheral edge of the disc and comprising a radial opening through which friction pads can be installed in the brake on opposite sides of the disc. Each friction pad has opposite sides defining a friction face for the engagement with the disc and a thrust-receiving face for receiving a force from the brake application means and having two laterally spaced radial fins which protrude from the outer edge thereof, respectively, the lateral dimension of which between the inner faces of the fins at the inner ends thereof is greater than the lateral dimension between the inner faces of the fins at the outer ends thereof to define a pair of spaced recesses. The caliper is provided, on opposite sides of the radial opening, with skirts in which pairs of recesses corresponding to the recesses in the pads are provided, as well as side edges of a blade spring extending beyond the peripheral edge of the disc which is received in the recesses of the pads. The side edges of the blade spring, when it is not biased, are spaced apart by a greater distance than the distance between the recesses of the fins so that the spring is biased to the position of use thereof.

**.** This solution has significant drawbacks in using a leaf spring which is pretensioned and keeps the pads preloaded, both in assembly and especially in use, creating undesirable jamming in the pad movement.

**.** In addition, the described documents of the prior art provide floating calipers having sliding surfaces orthogonal to further surfaces intended to discharge the braking torque, said sliding surfaces being adjacent to said further surfaces.

**.** Still further, none of the known solutions, albeit having a fixed caliper, provide solutions that are simple to make, have a small number of components, and are reliable in operation.

### . Solution

**.** The present invention aims at providing a caliper body and brake pad assembly.

**.** These and other objects are achieved by an assembly according to claim 1 and by a method according to claim 16.

. Some advantageous embodiments are the subject of the dependent claims.

**.** By virtue of the suggested solutions, it is possible to have machined sliding or support surfaces obtained directly on the caliper body and having sliding surfaces suitable for the sliding of pad support plates for disc brakes only.

**.** The invention further involves the creation of appropriate support plate protuberances, or support hooks, at the upper or radially outer part of the pad support plate, having support surfaces which can slide on said machined surfaces.

**.** In particular, such support hooks are made at a central portion of said pad support plates, so that they can couple to such machined surfaces, which are preferably made in the central bridge zone, or above the pad supports. Such machined surfaces on the caliper body have an extension such as to allow said support surfaces of the pad support plate to slide so that the pad can switch from a resting, non-worn position, in which the pad is not in contact with a brake disc and away therefrom with the support plate thereof, to an operating, maximum-wear position, in which the pad is in contact with the brake disc because a braking action has been required by a user and having the friction material worn off, but without the occurrence of breakage and/or slippage of said pad support plates from said machined surfaces.

**.** The sizing of such sliding surfaces is studied by considering the load that such surfaces must bear. Specifically, the sizing of the sliding surface is done by considering the weight of the pad, the acceleration reached during a braking action, and the sliding surface of said support hooks made on said pad support plate.

**.** The sliding surface of said support hooks is preferably flat, so as to minimize the pressure applied by said support plate to said sliding surface.

**.** An alternative embodiment provides a sliding surface of said support hooks of a punctual or linear type.

**.** The suggested assembly is designed so that, unlike the documents of the prior art, the braking torque is discharged onto the radial support surfaces, in the figures shown as vertical and side surfaces of said support plates, placed at distal end positions with respect to the position in which the machined surfaces are made on the caliper body. This ensures a sufficiently large braking torque discharge surface to minimize the likelihood of wear marks (nicks) occurring on said support surface due to said pad support plates sliding thereon.

**.** By virtue of the suggested solutions, it is possible to have a disc brake braking system which comprises a brake caliper having a pair of pads adapted to apply a braking action to the surface of a disc. Each pad of said pair of pads is supported by a pad support plate. Said braking system features said brake caliper which includes central bridge protuberances with machined surfaces obtained directly on the caliper body and having caliper sliding surfaces suitable for the sliding of pad support plates for disc brakes only. Said pad support plate includes at least one pair of pad protuberances, or support hooks, placed at the upper part of said pad support plate. Each of said support hooks comprise plate sliding surfaces adapted to slide on said caliper sliding surfaces of said machined surfaces.

### . Figures

**.** Further features and advantages of the invention will become apparent from the description provided below of preferred exemplary embodiment thereof, given by way of non-limiting indication, with reference to the accompanying drawings, in which:

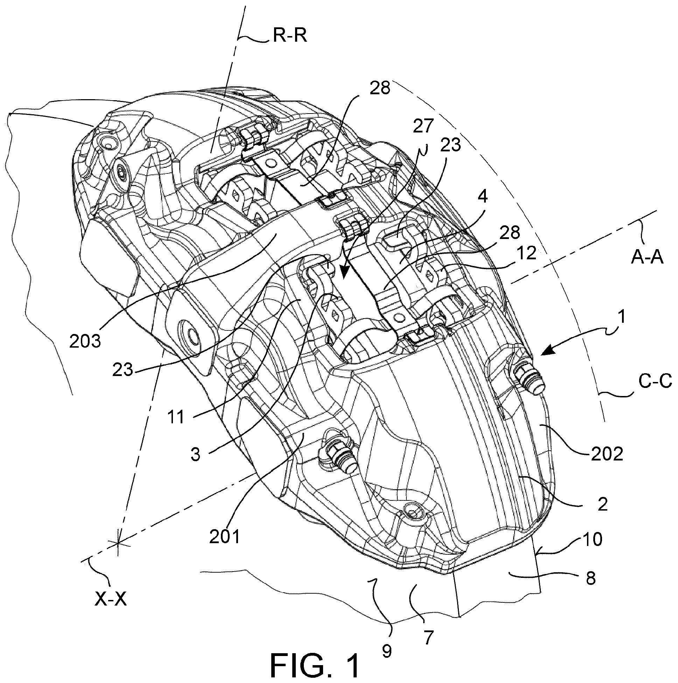

- figure 1 shows an axonometric view from the outer radial side, i.e., facing the axis of the brake disc, of a caliper comprising an assembly of caliper body and brake pads according to the invention, in which said caliper is placed straddling the braking band of a brake disc;

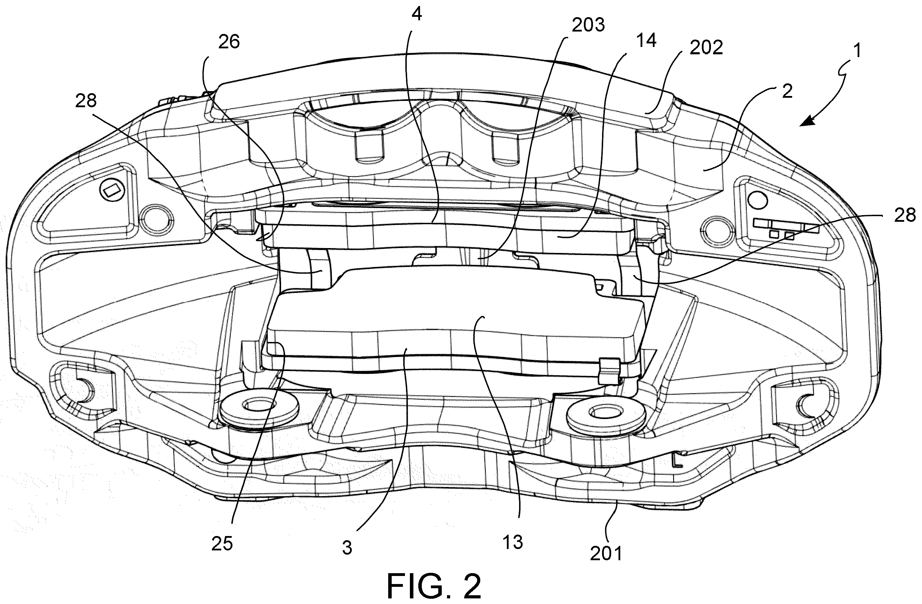

- figure 2 shows an axonometric view of the caliper in figure 1 free from the brake disc and viewed from the inner radial side, i.e., facing away from the axis of the brake disc to which such a caliper is arranged in a straddling fashion;

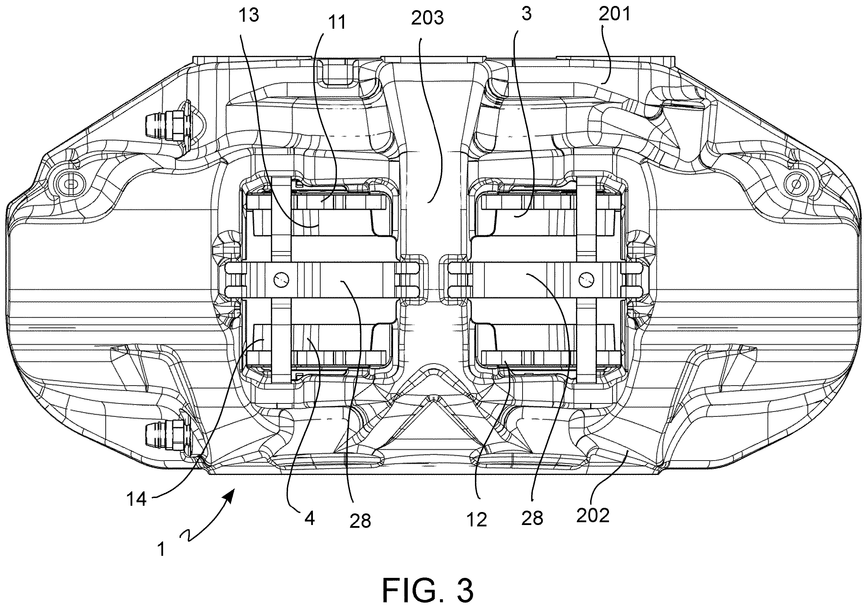

- figure 3 shows an orthogonal top view of the caliper in figure 1, i.e., in radial direction looking toward the axis of the brake disc to which said caliper is arranged in a straddling fashion;

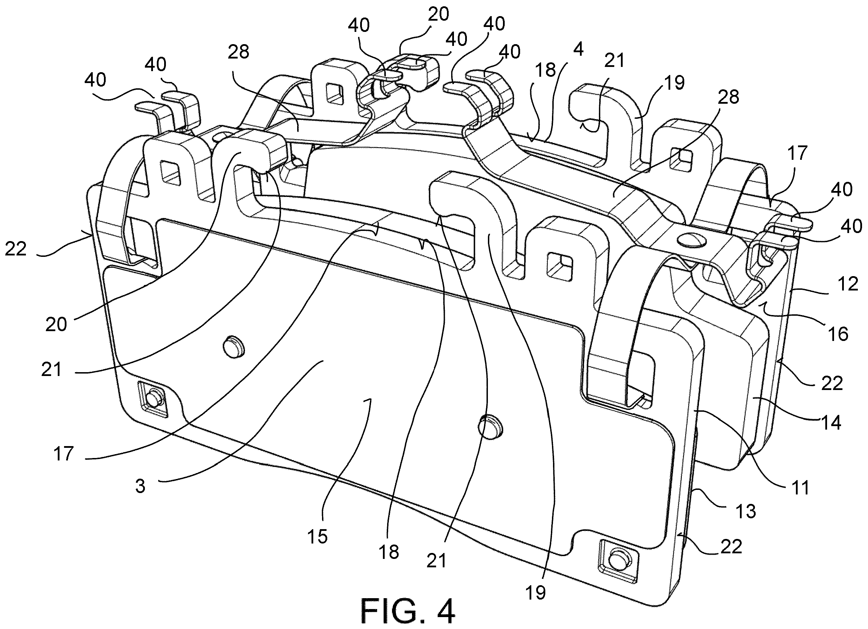

- figure 4 shows an axonometric view of the pair of brake pads of the caliper in figure 1 with which two band springs are associated and on the plate thrust surfaces of which an antivibration, load distribution, and thermal shear plate is placed;

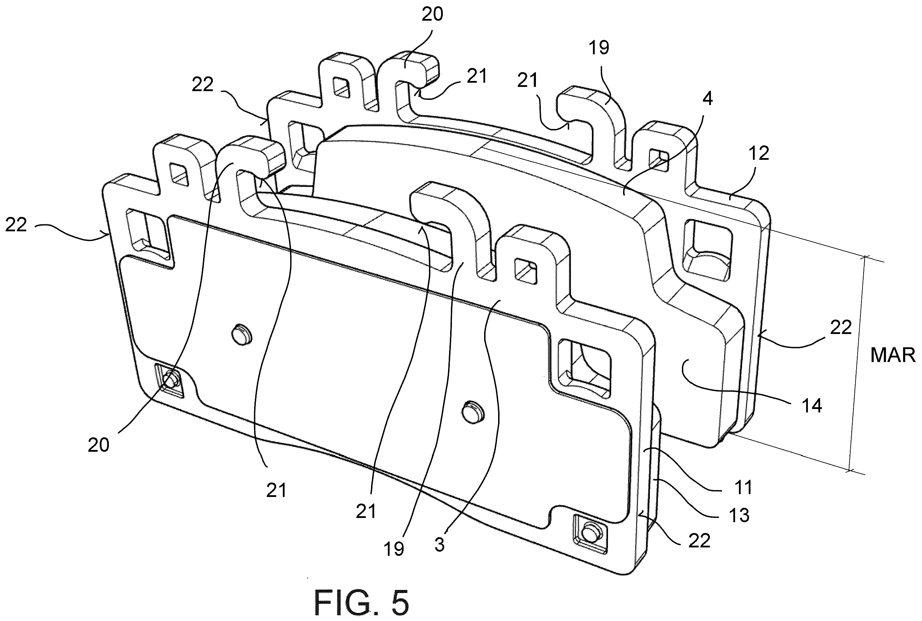

- figure 5 shows an axonometric view of the pair of brake pads in figure 4 without the associated band springs;

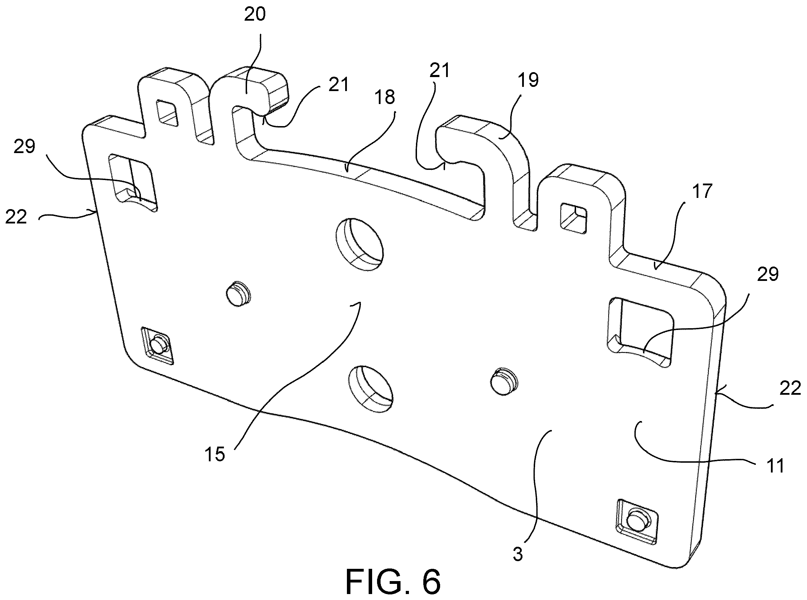

- figure 6 shows an axonometric view of a plate of a brake pad in figure 4;

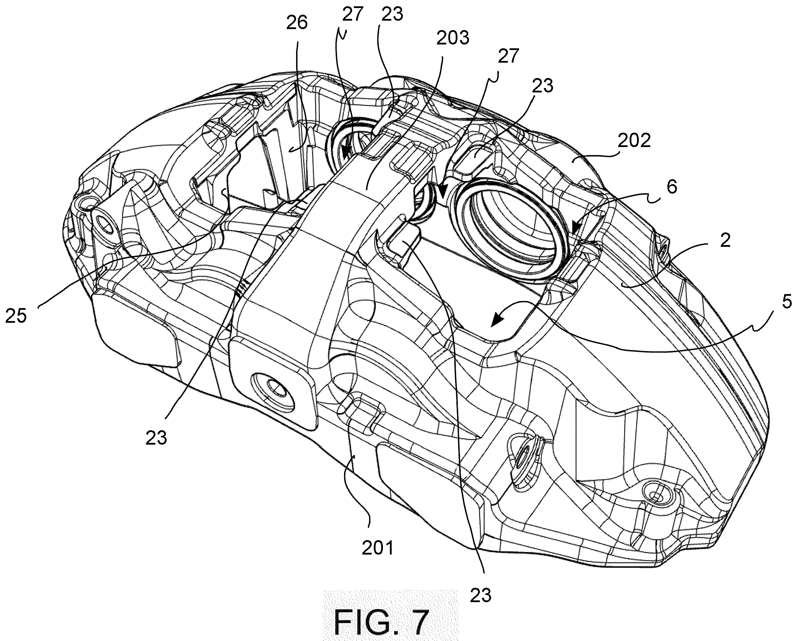

- figure 7 shows an axonometric view of the caliper body in figure 1 alone;

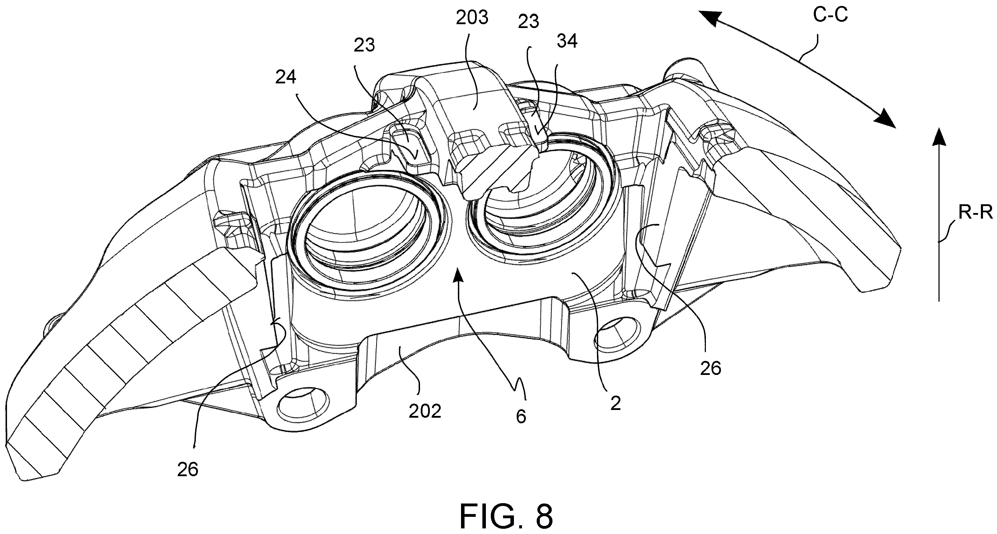

- figure 8 shows an axonometric view, sectioned along the centerline taken along a plane containing a radial and a circumferential direction, of the caliper body in figure 7;

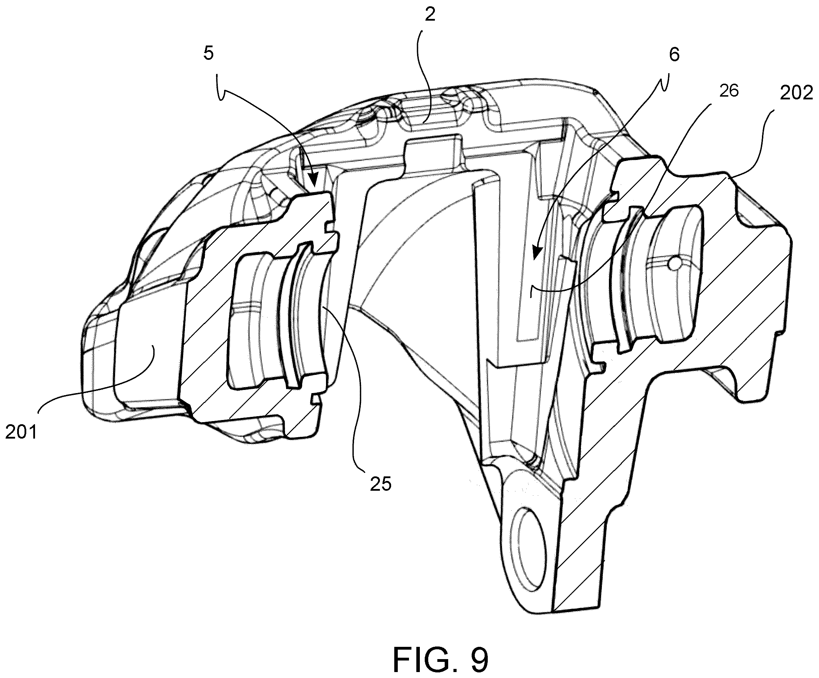

- figure 9 shows an axonometric view, sectioned close to the caliper support surfaces of the pockets adapted to accommodate the pads, taken along a plane containing the radial and axial directions, of the caliper body in figure 7;

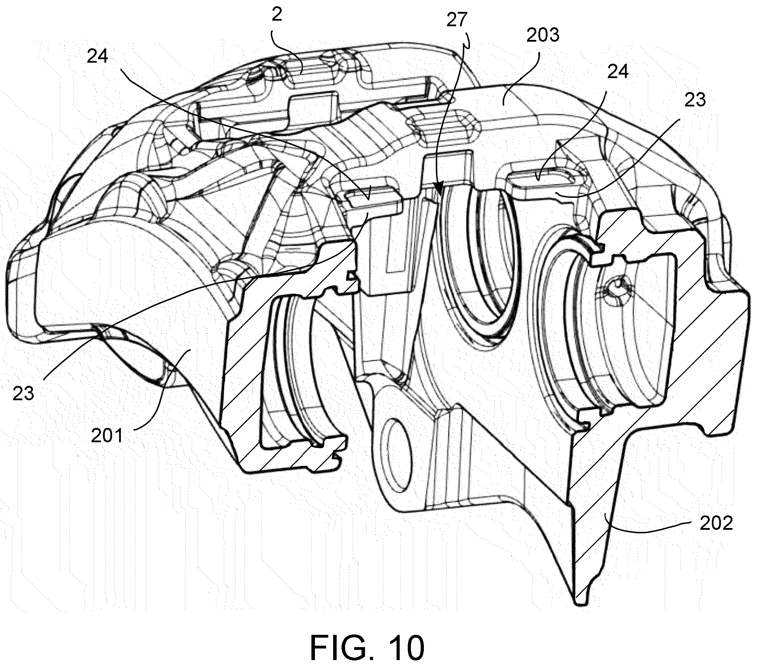

- figure 10 shows an axonometric view, sectioned close to the central bridge taken along to a plane containing the radial and axial directions, of the caliper body in figure 7;

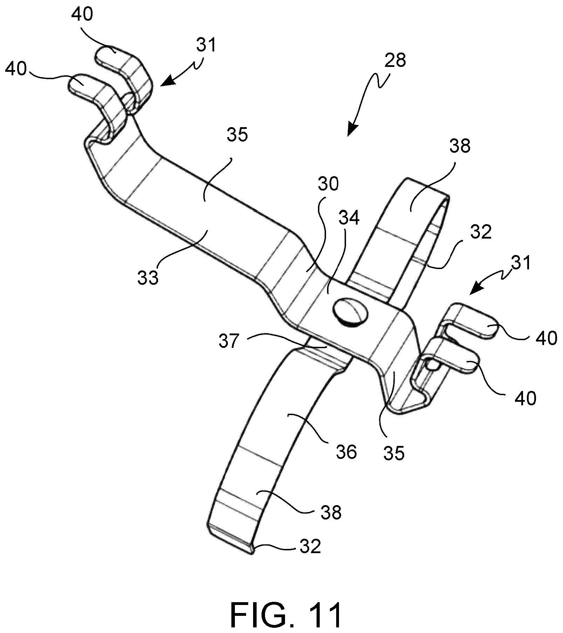

- figure 11 shows an axonometric view of one of the band springs adapted to bias the pair of brake pads of the caliper in figure 1;

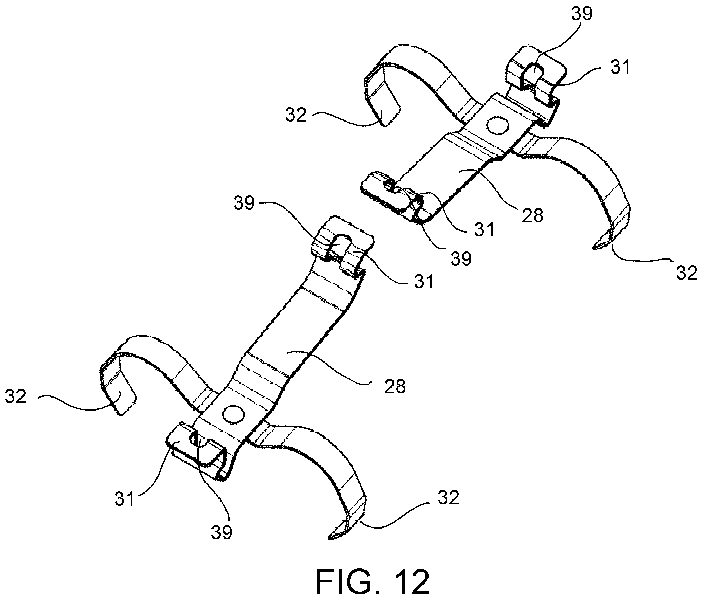

- figure 12 shows an axonometric view of the pair of band springs adapted to bias the pair of brake pads of the caliper in figure 1;

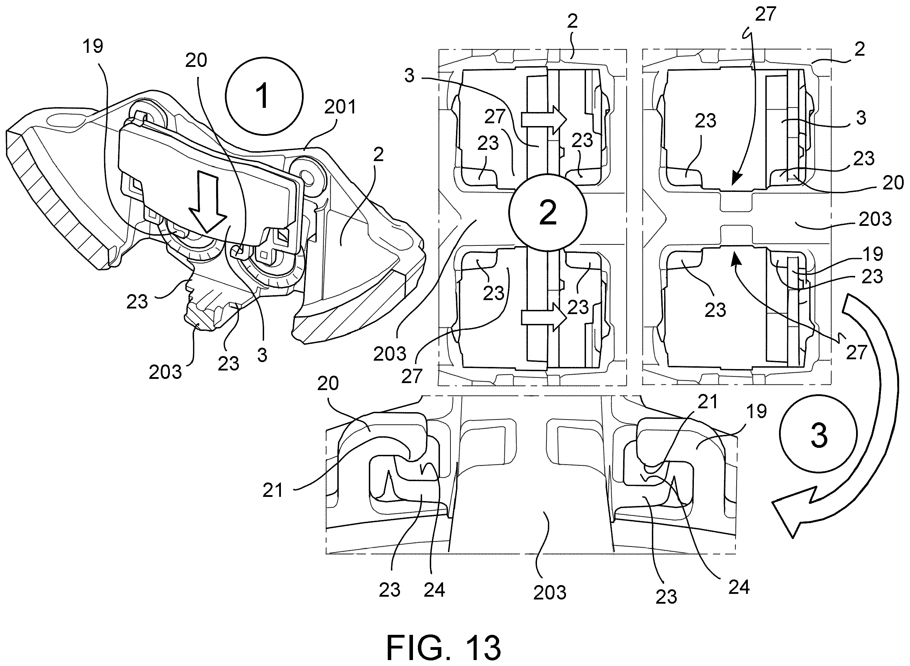

- figure 13 shows three different steps of assembling a brake pad in a caliper body of a caliper according to figure 1;

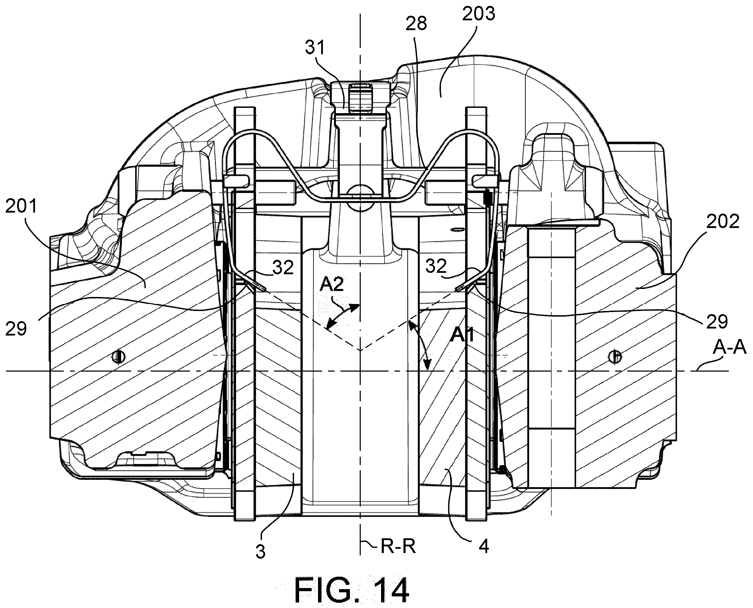

- figure 14 shows a section view of the caliper in figure 1 at the second thrust portions of band spring on a plane containing a radial direction and an axial direction, in which the elastic thrust of the band spring on the brake pads is highlighted.

### . Description of some preferred embodiments

**.** According to a general embodiment of the present invention, an assembly 1 comprises a caliper body 2 and brake pads 3, 4. Said caliper body 2 comprises two pockets 5, 6 which receive the pads 3, 4. The caliper body 2 comprises two elongated elements 201, 202 and at least one central bridge 203 which crosses the two pockets 5, 6. Each brake pad 3, 4 comprises a support plate 11, 12 and friction material 13, 14 of a predetermined radial extension MAR. Each support plate 11, 12 comprises a support plate edge 17 having an upper edge portion 18. Each support plate 11, 12 comprises at least one protuberance 19, 20 which projects from said upper edge portion 18 and is hook-shaped defining a plate sliding surface 21 indirectly facing said rotation axis X-X. Each support plate 11, 12 comprises at least one pad support surface 22 arranged substantially orthogonal to said circumferential direction C-C which extends over at least half of the predetermined radial extension MAR of said friction material 13, 14. Said central bridge 203 comprises at least two central bridge protuberances 23 separated by a central bridge window 27, which form caliper body sliding surfaces 24 which face said plate sliding surfaces 21. The caliper body 2 comprises at least two caliper support surfaces 25, 26 which face said pad support surfaces 22.

**.** According to an embodiment, an assembly 1 comprises a caliper body 2 and brake pads 3, 4.

**.** The caliper body 2 comprises two mutually facing pockets 5, 6 which receive said two brake pads 3, 4 so that, when the caliper body 2 is placed straddling a braking band 7 of a brake disc 8, said brake pads 3, 4 face said opposite braking surfaces 9, 10 of said braking band 7.

**.** Said braking band 7 comprises opposite braking surfaces 9, 10.

**.** Said caliper body 2 comprises a first and a second elongated element 201, 202 that, when the caliper body 2 is placed straddling the braking band 7, face said opposite braking surfaces 9, 10.

**.** Said caliper body 2 comprises at least one central bridge 203 which connects said first and said second elongated elements 201, 202 crossing said two pockets 5, 6.

**.** Said brake disc 8 comprises a rotation axis X-X which defines an axial direction A-A either coinciding with or parallel to said rotation axis X-X, a radial direction R-R orthogonal to said rotation axis X-X, and a circumferential direction C-C orthogonal to said axial direction A-A and said radial direction R-R.

**.** According to an embodiment, said of said brake pads 3, 4 comprises a support plate 11, 12 adapted to support a friction material 13, 14 and support the brake pad 3, 4 to said caliper body 2.

**.** According to an embodiment, said friction material 13, 14 comprises a predetermined radial extension MAR.

**.** According to an embodiment, each support plate 11, 12 comprises a thrust surface 15, an opposite friction material support surface 16, and a support plate edge 17 which connects said thrust surface 15 to said opposite friction material support surface 16.

**.** According to an embodiment, said support plate edge 17 comprises an upper edge portion 18 facing the opposite side with respect to said rotation axis X-X.

**.** According to an embodiment, each support plate 11, 12 comprises at least one protuberance 19, 20 which projects from said upper edge portion 18 of said support plate edge 17 and is hook-shaped defining a plate sliding surface 21.

**.** According to an embodiment, said plate sliding surface 21 substantially and indirectly faces said rotation axis X-X.

**.** According to an embodiment, each support plate 11, 12 comprises at least one pad support surface 22 arranged substantially orthogonal to said circumferential direction C-C.

**.** According to an embodiment, said pad support surface 22 extends over at least 1/2 of the predetermined radial extent MAR of said friction material 13, 14.

**.** According to an embodiment, said at least one central bridge 203 of caliper body 2 comprises at least two central bridge protuberances 23 forming at least two caliper body sliding surfaces 24 which, when the brake pads 3, 4 are mounted in said caliper body 2, face said plate sliding surfaces 21.

**.** According to an embodiment, said caliper body 2 comprises at least two caliper support surfaces 25, 26 which, when the brake pads 3, 4 are mounted in said caliper body 2, face said pad support surfaces 22.

. According to an embodiment, said at least two central bridge protuberances 23 are separated from each other by at least one central bridge window 27 which allows the passage of at least one portion of said at least one protuberance 19, 20 in order to allow each of said at least two support plates 11, 12 to be mounted in said caliper body 2 bringing said plate support surface 21 to face one of said caliper body sliding surfaces 24 and bringing said pad support surface 22 to face one of said caliper support surfaces 25, 26.

**.** According to an embodiment, said plate sliding surface 21 faces said upper edge portion 18 of the support plate edge 17.

**.** According to an embodiment, said plate sliding surface 21 is arranged as an undercut with respect to said support plate protuberance 19, 20.

**.** According to an embodiment, said at least one support plate protuberance 19, 20 is placed radially outside the pad friction material 13, 14 on the opposite side with respect to the rotation axis X-X, when the caliper body 2 is mounted straddling the braking band 7.

**.** According to an embodiment, said at least one pad support surface 22 extends in the radial direction and extends at least as much as said friction material with its predetermined radial extension of friction material MAR.

**.** According to an embodiment, said caliper support surfaces are at least two caliper support surfaces 24, 25 and are arranged on opposite sides, one for each elongated element 201, 202.

**.** According to an embodiment, said caliper body 2 is a body in a single piece. According to an embodiment, said caliper body is made in two pieces, for example joined together be means of studs or bolts.

**.** According to an embodiment, said central bridge 203 of caliper body is a single body with said first and said second elongated elements 201, 202 of caliper body.

**.** According to an embodiment, two support plate protuberances 19, 20 are provided for each support plate 11, 12.

**.** According to an embodiment, two support plate protuberances 19, 20 are provided for each support plate 11, 12 and these two support plate protuberances 19, 20 face each other or are mutually specularly arranged.

**.** According to an embodiment, said central bridge 203 comprises four central bridge protuberances 23, arranged in pairs from opposite orientations of the central bridge 203.

**.** According to an embodiment, said caliper support surface 25, 26 consists of at least two caliper support surfaces 25, 26 each placed to delimit a caliper body pocket 5, 6 to house the respective brake pad 3, 4, delimiting said caliper body pocket 5, 6 which allows the pad to abut against the caliper body 2 during a braking action.

**.** According to an embodiment, said at least one pad support surface 22 consists of two opposite pad support surfaces 22 to allow the brake pad 3, 4 to abut against the caliper body 2 during a forward and reverse braking action of the vehicle which features said caliper body 2.

**.** According to an embodiment, said assembly 1 further comprises at least one band spring 28 shaped to be arranged straddling the brake disc 8 to apply an elastic action to at least one of said brake pads 3, 4 to bias it away from said brake disc 8.

**.** According to an embodiment, said at least one brake pad 3, 4 comprises said support plate 11, 12 which supports said friction material 13, 14, said support plate 11, 12 comprises said plate edge 17 which forms at least one thrust portion 29.

**.** According to an embodiment, said band spring 28 comprises a band-shaped spring body 30.

**.** According to an embodiment, said band spring 28 comprises at least two spring portions 31, 32, at least two of which are mutually distinct, namely
- a first coupling portion 31 adapted to couple said band spring 28 to the caliper body 2;
- a second thrust portion 32 adapted to apply said elastic action to said thrust portion 29 of said at least one brake pad 3, 4 biasing said brake pad 3, 4 at least away from said brake disc 8 in the axial direction A-A and the radial direction R-R.

**.** According to an embodiment, said at least one band spring 28 comprises a first spring body band 33 comprising a first connection portion 34 from which two first spring arms 35 move away.

**.** According to an embodiment, a second spring body band 36 comprises a second connection portion 37 from which two second spring arms 38 move away.

**.** According to an embodiment, said first connection portion 34 of said first spring body band 33 is connected to said second connection portion 37 of said second spring body band 36 so as to arrange said two first spring arms 35 orthogonal to said two second spring arms 38.

**.** According to an embodiment, said first coupling portion 31 is shaped so as to be snap-coupled to said caliper body 2.

**.** According to an embodiment, said first coupling portion 31 is shaped forming a through-window 39 of first coupling portion.

**.** Said first coupling portion 31 is shaped forming independent arms 40 projecting in a cantilevered fashion when the band spring 28 is not mounted to the caliper body 2.

**.** According to an embodiment, said second thrust portion 32, when supported under operating conditions by said at least one pad 3, 4, is arranged inclined with respect to said axial direction A-A as well as with respect to said radial direction R-R forming a predetermined angle A1 between said second thrust portion 32 and said axial direction A-A and forming a predetermined angle A2 between said second thrust portion 32 and said radial direction R-R.

**.** According to an embodiment, said band spring consist of two band springs 28 placed on either side of the central bridge 203.

**.** The present invention also relates to a method of assembling a brake pad 3, 4 to a brake caliper 2.

**.** This method includes the following steps:
- providing an assembly 1 as defined in any one of the embodiments described above;
- inserting, substantially in the radial direction R-R, the brake pad 3, 4 into the caliper body 2 on the opposite side of the center bridge 203, by aligning the at least one plate protuberance 19, 20 with the central bridge window 27, so that the plate protuberance 19, 20 goes radially beyond the center bridge protuberances 23;
- sliding the brake pad 3, 4 in the axial direction A-A by inserting it into the respective caliper body pocket 5, 6, so that the plate thrust surface 15 thereof faces the caliper body and the at least one plate sliding surface 21 faces the caliper body sliding surface 24 and the at least one pad support surface 22 faces the at least one caliper support surface 25, 26.

**.** According to a further constructional variant of the aforesaid method, there are included the further steps of:
- providing a band spring 28 according to any one of claims 11 to 15;
- inserting said band spring 28 by snap-coupling said first coupling portion 31 to said caliper body 2 and supporting said second thrust portion 32 on said thrust portion 29 of the plate edge.

### LIST OF REFERENCE SIGNS

- 1: caliper body assembly
- 2: caliper body
- 3: brake pad
- 4: brake pad
- 5: pocket in caliper body for housing brake pad
- 6: pocket in caliper body for housing brake pad
- 7: braking band
- 8: brake disc
- 9: braking band braking surface
- 10: braking band braking surface
- 11: pad support plate
- 12: pad support plate
- 13: pad friction material
- 14: pad friction material
- 15: plate thrust surface
- 16: friction material support surface of plate
- 17: support plate edge
- 18: upper edge portion of support plate edge
- 19: support plate protuberance
- 20: support plate protuberance
- 21: plate sliding surface
- 22: pad support surface
- 23: central bridge protuberance
- 24: caliper body sliding surface
- 25: caliper support surface
- 26: caliper support surface
- 27: central bridge window
- 28: band spring
- 29: thrust portion of support plate edge
- 30: band-shaped spring body
- 31: first spring coupling portion
- 32: second spring thrust portion
- 33: first spring body band
- 34: first spring connection portion
- 35: first spring arms
- 36: second spring body band
- 37: second connection portion
- 38: second spring arms
- 39: through-window of first coupling portion
- 40: independent arms
- 201: first elongated element of caliper body
- 202: second elongated element of caliper body
- 203: central bridge of caliper body
- X-X: rotation and symmetry axis of disc brake disc
- A_A: axial direction
- R-R: radial direction
- C-C: circumferential direction
- MAR: radial extension of the pad friction material

## Claims

1. An assembly (1) of caliper body (2) and brake pads (3, 4), wherein the caliper body (2) comprises two pockets (5, 6) facing each other, which receive said two brake pads (3, 4) so that, when the caliper body (2) is placed straddling a braking band (7) of a brake disc (8), where said braking band (7) comprises opposite braking surfaces (9, 10), said brake pads (3, 4) face said opposite braking surfaces (9, 10) of said braking band (7); and wherein
said caliper body (2) comprises a first and a second elongated element (201, 202), which, when the caliper body (2) is placed straddling the braking band (7), face said opposite braking surfaces (9, 10); and wherein
said caliper body (2) comprises at least one central bridge (203) which connects said first and said second elongated elements (201, 202) crossing said two pockets (5, 6);
said brake disc (8) comprises a rotation axis (X-X), which defines an axial direction (A-A), either coinciding with or parallel to said rotation axis (X-X), a radial direction (R-R) orthogonal to said rotation axis (X-X), and a circumferential direction (C-C) orthogonal to said axial direction (A-A) and said radial direction (R-R);
each of said brake pads (3, 4) comprises a support plate (11, 12) adapted to support a friction material (13, 14) and support the brake pad (3, 4) at said caliper body (2); and wherein
said friction material (13, 14) comprises a predetermined radial extension (MAR);
each support plate (11, 12) comprises a thrust surface (15), an opposite friction material support surface (16), and a support plate edge (17), which connects said thrust surface (15) to said opposite friction material support surface (16); and wherein
said support plate edge (17) comprises an upper edge portion (18) facing the opposite side with respect to said rotation axis (XX); and wherein
each support plate (11, 12) comprises at least one protuberance (19, 20) projecting from said upper edge portion (18) of said support plate edge (17) and is hook-shaped defining a plate sliding surface (21); wherein said plate sliding surface (21) substantially faces said rotation axis (X-X) indirectly;
each support plate (11, 12) comprises at least one pad support surface (22) arranged substantially orthogonal to said circumferential direction (C-C); wherein said pad support surface (22) extends over at least 1/2 of the predetermined radial extension (MAR) of said friction material (13, 14); and wherein
said at least one central bridge (203) of caliper body (2) comprises at least two central bridge protuberances (23) forming at least two caliper body sliding surfaces (24) which, when the brake pads (3, 4) are mounted in said caliper body (2), face said plate sliding surfaces (21); and the assembly (1) being **characterized in that**
said caliper body (2) comprises at least two caliper support surfaces (25, 26) which, when the brake pads (3, 4) are mounted in said caliper body (2), face said pad support surfaces (22);
said at least two central bridge protuberances (23) are separated from each other by at least one central bridge window (27) which allows at least one portion of said at least one bridge protuberance (19, 20) to pass in order to allow mounting each of said at least two support plates (11, 12) in said caliper body (2) bringing said plate resting surface (21) to face one of said caliper body sliding surfaces (24) and bringing said pad support surface (22) to face one of said caliper support surfaces (25, 26).

2. An assembly (1) according to claim 1, wherein
said plate sliding surface (21) faces said upper edge portion (18) of the support plate edge (17);
or wherein
said plate sliding surface (21) is arranged as an undercut with respect to said plate support protuberance (19, 20).

3. An assembly (1) according to any one of the preceding claims, wherein
said at least one support plate protuberance (19, 20) is placed radially outside the pad friction material (13, 14) on the opposite side with respect to the rotation axis (X-X) when the caliper body (2) is mounted straddling the braking band (7).

4. An assembly (1) according to any one of the preceding claims, wherein
said at least one pad support surface (22) extends in the radial direction and extends at least as much as said friction material with the predetermined radial extension of friction material (MAR).

5. An assembly (1) according to any one of the preceding claims, wherein
said caliper support surfaces are at least two caliper support surfaces (24, 25) and are arranged on opposite sides, one for each elongated element (201, 202).

6. An assembly (1) according to any one of the preceding claims, wherein
said caliper body (2) is a one-piece body;
or wherein
said caliper body (2) is made in two parts;
or wherein
said central bridge (203) of caliper body is a single body with said first and said second elongated elements (201, 202) of caliper body.

7. An assembly (1) according to any one of the preceding claims, wherein
two support plate protuberances (19, 20) are provided for each support plate (11, 12);
or wherein
two support plate protuberances (19, 20) are provided for each support plate (11, 12), and these two support plate protuberances (19, 20) face each other or are mutually specularly arranged.

8. An assembly (1) according to any one of the preceding claims, wherein
said central bridge (203) comprises four central bridge protuberances (23), arranged in pairs from opposite orientations of the central bridge (203).

9. An assembly (1) according to any one of the preceding claims, wherein
said caliper support surface (25, 26) consists of at least two caliper support surfaces (25, 26) each placed to delimit a caliper body pocket (5, 6) to house the respective brake pad (3, 4), delimiting said caliper body pocket (5,6) which allows the pad to abut against the caliper body (2) during a braking action.

10. An assembly (1) according to any one of the preceding claims, wherein
said at least one pad support surface (22) consists of two opposite pad support surfaces (22) to allow the brake pad (3, 4) to abut against the caliper body (2) during a forward and reverse braking action of the vehicle which features said caliper body (2).

11. An assembly (1) according to any one of the preceding claims, wherein
said assembly (1) further comprises at least one band spring (28) shaped to be arranged straddling the brake disc (8) to apply an elastic action to at least one of said brake pads (3, 4) to bias it away from said brake disc (8); wherein
- said at least one brake pad (3, 4) comprises said support plate (11, 12), which supports said friction material (13, 14), said support plate (11, 12) comprises said plate edge (17) which forms at least one thrust portion (29);
- said band spring (28) comprises a band-shaped spring body (30);
- said band spring (28) comprises at least two spring portions (31, 32) at least two of which are mutually distinct, namely
- a first coupling portion (31) adapted to couple said band spring (28) to the caliper body (2);
- a second thrust portion (32) adapted to apply said elastic action to said thrust portion (29) of said at least one brake pad (3, 4) biasing said brake pad (3, 4) at least away from said brake disc (8) in an axial direction (A-A) and a radial direction (R-R).

12. An assembly (1) according to the preceding claim, wherein
at least one band spring (28) comprises a first spring body band (33) comprising a first connection portion (34) from which two first spring arms (35) move away; and wherein
a second spring body band (36) comprising a second connection portion (37) from which two second spring arms (38) move away; and wherein
said first connection portion (34) of said first spring body band (33) is connected to said second connection portion (37) of said second spring body band (36) to arrange said two first spring arms (35) orthogonal to said two second spring arms (38).

13. An assembly (1) according to claim 11 or 12, wherein
said first coupling portion (31) is shaped so as to be snap coupled to said caliper body (2);
and/or wherein
said first coupling portion (31) is shaped forming a through-window of the first coupling portion (39);
or wherein
said first coupling portion (31) is shaped forming independent arms (40) overhangingly projecting when the band spring (28) is not mounted to the caliper body (2).

14. An assembly (1) according to claim 11 or 12 or 13, wherein
said second thrust portion (32), when resting onto said at least one pad (3, 4) in operating conditions, is arranged to be inclined with respect to said axial direction (A-A) as well as with respect to said radial direction (R-R), forming a predetermined angle (A1) between said second thrust portion (32) and said axial direction (A-A) and forming a predetermined angle (A2) between said second thrust portion (32) and said radial direction (R-R).

15. An assembly (1) according to any one of claims 11 to 14, wherein said band spring consist of two band springs (28) placed on either side of the central bridge (203).

16. A method of mounting a brake pad (3, 4) to a caliper body (2), wherein the following steps are comprised:
- providing an assembly (1) according to any one of claims 1 to 15;
- inserting substantially in the radial direction (R-R) the brake pad (3, 4) into the caliper body (2) on the opposite side of the center bridge (203), aligning the at least one plate protuberance (19, 20) with the central bridge window (27), so that the plate protuberance (19, 20) passes radially beyond the center bridge protuberances (23);
- sliding the brake pad (3, 4) in the axial direction (A-A) by inserting it into the respective caliper body pocket (5, 6), so that the plate thrust surface (15) thereof faces the caliper body and the at least one plate thrust surface (21) faces the caliper body sliding surface (24) and the at least one pad support surface (22) faces the at least one caliper support surface (25, 26).

17. A method according to claim 16, wherein there are comprised the further steps of:
- providing a band spring (28) according to any one of claims 11 to 15;
- inserting said band spring (28) by snap-coupling said first coupling portion (31) to said caliper body (2) and supporting said second thrust portion (32) on said thrust portion (29) of the plate edge.

## Patentansprüche

1. Eine Anordnung (1) aus einem Bremssattelgehäuse (2) und Bremsbelägen (3, 4), wobei
das Bremssattelgehäuse (2) zwei einander zugewandte Taschen (5, 6) aufweist, die die beiden Bremsbeläge (3, 4) so aufnehmen, dass, wenn das Bremssattelgehäuse (2) rittlings auf einem Bremsband (7) einer Bremsscheibe (8) angeordnet ist, wobei das Bremsband (7) gegenüberliegende Bremsflächen (9, 10) aufweist, die Bremsbeläge (3, 4) den gegenüberliegenden Bremsflächen (9, 10) des Bremsbandes (7) zugewandt sind;
und wobei
das Bremssattelgehäuse (2) ein erstes und ein zweites längliches Element (201, 202) aufweist, die, wenn das Bremssattelgehäuse (2) rittlings auf dem Bremsband (7) angeordnet ist, den gegenüberliegenden Bremsflächen (9, 10) zugewandt sind;
und wobei
das Bremssattelgehäuse (2) mindestens eine zentrale Brücke (203) aufweist, die das erste und das zweite längliche Element (201, 202) verbindet und die beiden Taschen (5, 6) durchquert;
wobei
die Bremsscheibe (8) eine Drehachse (X-X) aufweist, die eine axiale Richtung (A-A), die entweder mit der Drehachse (X-X) zusammenfällt oder parallel dazu ist, eine radiale Richtung (R-R) orthogonal zur Drehachse (X-X) und eine Umfangsrichtung (C-C) orthogonal zur axialen Richtung (A-A) und zur radialen Richtung (R-R) definiert;
jeder der Bremsbeläge (3, 4) eine Trägerplatte (11, 12) aufweist, die dazu geeignet ist, ein Reibmaterial (13, 14) zu tragen und den Bremsbelag (3, 4) am Bremssattelgehäuse (2) zu stützen, und wobei
das Reibmaterial (13, 14) eine vorbestimmte radiale Erstreckung (MAR) aufweist;
jede Trägerplatte (11, 12) eine Druckfläche (15), eine gegenüberliegende Reibmaterialträgerfläche (16) und einen Trägerplattenrand (17) aufweist, der die Druckfläche (15) mit der gegenüberliegenden Reibmaterialträgerfläche (16) verbindet;
und wobei
der Trägerplattenrand (17) einen oberen Randabschnitt (18) aufweist, der der zur Drehachse (X-X) gegenüberliegenden Seite zugewandt ist;
und wobei
jede Trägerplatte (11, 12) mindestens einen Vorsprung (19, 20) aufweist, der vom oberen Randabschnitt (18) des Trägerplattenrandes (17) vorsteht und hakenförmig ist, wodurch eine Plattengleitfläche (21) definiert wird;
wobei die Plattengleitfläche (21) im Wesentlichen indirekt der Drehachse (X-X) zugewandt ist;
jede Trägerplatte (11, 12) mindestens eine Belagstützfläche (22) aufweist, die im Wesentlichen orthogonal zur Umfangsrichtung (C-C) angeordnet ist;
wobei sich die Belagstützfläche (22) über mindestens 1/2 der vorbestimmten radialen Erstreckung (MAR) des Reibmaterials (13, 14) erstreckt;
und wobei
die mindestens eine zentrale Brücke (203) des Bremssattelgehäuses (2) mindestens zwei Zentralbrückenvorsprünge (23) aufweist, die mindestens zwei Bremssattelgehäuse-Gleitflächen (24) bilden, die, wenn die Bremsbeläge (3, 4) im Bremssattelgehäuse (2) montiert sind, den Plattengleitflächen (21) zugewandt sind;
und wobei die Anordnung (1) ****dadurch gekennzeichnet** ist, dass**
das Bremssattelgehäuse (2) mindestens zwei Bremssattelstützflächen (25, 26) aufweist, die, wenn die Bremsbeläge (3, 4) im Bremssattelgehäuse (2) montiert sind, den Belagstützflächen (22) zugewandt sind;
die mindestens zwei Zentralbrückenvorsprünge (23) voneinander durch mindestens ein Zentralbrückenfenster (27) getrennt sind, das den Durchtritt mindestens eines Teils des mindestens einen Plattenvorsprungs (19, 20) ermöglicht, um die Montage jeder der mindestens zwei Trägerplatten (11, 12) in dem Bremssattelgehäuse (2) zu ermöglichen, wodurch die Plattengleitfläche (21) einer der Bremssattelgehäuse-Gleitflächen (24) zugewandt wird und die Belagstützfläche (22) einer der Bremssattelstützflächen (25, 26) zugewandt wird.

2. Anordnung (1) nach Anspruch 1, wobei die Plattengleitfläche (21) dem oberen Randabschnitt (18) des Trägerplattenrandes (17) zugewandt ist; oder wobei die Plattengleitfläche (21) als Hinterschnitt in Bezug auf den Plattenstützvorsprung (19, 20) ausgebildet ist.

3. Anordnung (1) nach einem der vorhergehenden Ansprüche, wobei der mindestens eine Trägerplattenvorsprung (19, 20) radial außerhalb des Belagreibmaterials (13, 14) auf der der Drehachse (X-X) gegenüberliegenden Seite angeordnet ist, wenn das Bremssattelgehäuse (2) rittlings auf dem Bremsband (7) montiert ist.

4. Anordnung (1) nach einem der vorhergehenden Ansprüche, wobei sich die mindestens eine Belagstützfläche (22) in radialer Richtung erstreckt und sich mindestens so weit erstreckt wie das Reibmaterial mit der vorbestimmten radialen Erstreckung des Reibmaterials (MAR).

5. Anordnung (1) nach einem der vorhergehenden Ansprüche, wobei die Bremssattelstützflächen mindestens zwei Bremssattelstützflächen (24, 25) sind und auf gegenüberliegenden Seiten, eine für jedes längliche Element (201, 202), angeordnet sind.

6. Anordnung (1) nach einem der vorhergehenden Ansprüche, wobei das Bremssattelgehäuse (2) ein einteiliger Körper ist; oder wobei das Bremssattelgehäuse (2) zweiteilig ausgebildet ist; oder wobei die zentrale Brücke (203) des Bremssattelgehäuses ein einziger Körper mit dem ersten und dem zweiten länglichen Element (201, 202) des Bremssattelgehäuses ist.

7. Anordnung (1) nach einem der vorhergehenden Ansprüche, wobei für jede Trägerplatte (11, 12) zwei Trägerplattenvorsprünge (19, 20) vorgesehen sind; oder wobei für jede Trägerplatte (11, 12) zwei Trägerplattenvorsprünge (19, 20) vorgesehen sind, und diese beiden Trägerplattenvorsprünge (19, 20) einander zugewandt oder zueinander spiegelbildlich angeordnet sind.

8. Anordnung (1) nach einem der vorhergehenden Ansprüche, wobei die zentrale Brücke (203) vier Zentralbrückenvorsprünge (23) aufweist, die paarweise aus entgegengesetzten Ausrichtungen der zentralen Brücke (203) angeordnet sind.

9. Anordnung (1) nach einem der vorhergehenden Ansprüche, wobei die Bremssattelstützfläche (25, 26) aus mindestens zwei Bremssattelstützflächen (25, 26) besteht, die jeweils so platziert sind, dass sie eine Bremssattelgehäusetasche (5, 6) zur Aufnahme des jeweiligen Bremsbelags (3, 4) begrenzen, wobei die Bremssattelgehäusetasche (5, 6) so begrenzt wird, dass der Belag während eines Bremsvorgangs am Bremssattelgehäuse (2) anliegen kann.

10. Anordnung (1) nach einem der vorhergehenden Ansprüche, wobei die mindestens eine Belagstützfläche (22) aus zwei gegenüberliegenden Belagstützflächen (22) besteht, damit der Bremsbelag (3, 4) während eines Vorwärts- und Rückwärtsbremsvorgangs des Fahrzeugs, das das Bremssattelgehäuse (2) aufweist, am Bremssattelgehäuse (2) anliegen kann.

11. Anordnung (1) nach einem der vorhergehenden Ansprüche, wobei die Anordnung (1) ferner mindestens eine Bandfeder (28) aufweist, die so geformt ist, dass sie rittlings auf der Bremsscheibe (8) angeordnet ist, um eine elastische Wirkung auf mindestens einen der Bremsbeläge (3, 4) auszuüben, um ihn von der Bremsscheibe (8) wegzudrücken; wobei der mindestens eine Bremsbelag (3, 4) die Trägerplatte (11, 12) aufweist, die das Reibmaterial (13, 14) trägt, wobei die Trägerplatte (11, 12) den Plattenrand (17) aufweist, der mindestens einen Druckabschnitt (29) bildet; die Bandfeder (28) einen bandförmigen Federkörper (30) aufweist; die Bandfeder (28) mindestens zwei Federabschnitte (31, 32) aufweist, von denen mindestens zwei voneinander verschieden sind, nämlich einen ersten Kopplungsabschnitt (31), der dazu ausgebildet ist, die Bandfeder (28) mit dem Bremssattelgehäuse (2) zu koppeln; einen zweiten Druckabschnitt (32), der dazu ausgebildet ist, die elastische Wirkung auf den Druckabschnitt (29) des mindestens einen Bremsbelags (3, 4) auszuüben, wobei der Bremsbelag (3, 4) mindestens von der Bremsscheibe (8) in axialer Richtung (A-A) und radialer Richtung (R-R) weggedrückt wird.

12. Anordnung (1) nach dem vorhergehenden Anspruch, wobei mindestens eine Bandfeder (28) ein erstes Federkörperband (33) aufweist, das einen ersten Verbindungsabschnitt (34) umfasst, von dem sich zwei erste Federarme (35) entfernen; und wobei ein zweites Federkörperband (36) einen zweiten Verbindungsabschnitt (37) umfasst, von dem sich zwei zweite Federarme (38) entfernen; und wobei der erste Verbindungsabschnitt (34) des ersten Federkörperbands (33) mit dem zweiten Verbindungsabschnitt (37) des zweiten Federkörperbands (36) verbunden ist, um die beiden ersten Federarme (35) orthogonal zu den beiden zweiten Federarmen (38) anzuordnen.

13. Anordnung (1) nach Anspruch 11 oder 12, wobei der erste Kopplungsabschnitt (31) so geformt ist, dass er mit dem Bremssattelgehäuse (2) verrastet werden kann; und/oder wobei der erste Kopplungsabschnitt (31) so geformt ist, dass er ein Durchgangsfenster des ersten Kopplungsabschnitts (39) bildet; oder wobei der erste Kopplungsabschnitt (31) so geformt ist, dass er unabhängige Arme (40) bildet, die freitragend vorstehen, wenn die Bandfeder (28) nicht am Bremssattelgehäuse (2) montiert ist.

14. Anordnung (1) nach Anspruch 11 oder 12 oder 13, wobei der zweite Druckabschnitt (32), wenn er im Betriebszustand auf dem mindestens einen Belag (3, 4) aufliegt, so angeordnet ist, dass er sowohl gegenüber der axialen Richtung (A-A) als auch gegenüber der radialen Richtung (R-R) geneigt ist, wobei er einen vorbestimmten Winkel (A1) zwischen dem zweiten Druckabschnitt (32) und der axialen Richtung (A-A) und einen vorbestimmten Winkel (A2) zwischen dem zweiten Druckabschnitt (32) und der radialen Richtung (R-R) bildet.

15. Anordnung (1) nach einem der Ansprüche 11 bis 14, wobei die Bandfeder aus zwei Bandfedern (28) besteht, die auf beiden Seiten der zentralen Brücke (203) angeordnet sind.

16. Ein Verfahren zum Montieren eines Bremsbelags (3, 4) an einem Bremssattelgehäuse (2), das die folgenden Schritte umfasst:
Bereitstellen einer Anordnung (1) nach einem der Ansprüche 1 bis 15;
Einsetzen des Bremsbelags (3, 4) im Wesentlichen in radialer Richtung (R-R) in das Bremssattelgehäuse (2) auf der gegenüberliegenden Seite der zentralen Brücke (203), Ausrichten des mindestens einen Plattenvorsprungs (19, 20) mit dem Zentralbrückenfenster (27), so dass der Plattenvorsprung (19, 20) radial über die Zentralbrückenvorsprünge (23) hinausragt;
Verschieben des Bremsbelags (3, 4) in axialer Richtung (A-A) durch Einsetzen in die jeweilige Bremssattelgehäusetasche (5, 6), so dass dessen Plattengleitfläche (15) dem Bremssattelgehäuse zugewandt ist und die mindestens eine Plattendruckfläche (21) der Bremssattelgehäuse-Gleitfläche (24) zugewandt ist und die mindestens eine Belagstützfläche (22) der mindestens einen Bremssattelstützfläche (25, 26) zugewandt ist.

17. Ein Verfahren nach Anspruch 16, das die weiteren Schritte umfasst:
Bereitstellen einer Bandfeder (28) nach einem der Ansprüche 11 bis 15;
Einsetzen der Bandfeder (28) durch Verrasten des ersten Kopplungsabschnitts (31) mit dem Bremssattelgehäuse (2) und Abstützen des zweiten Druckabschnitts (32) auf dem Druckabschnitt (29) des Plattenrands.

## Revendications

1. Un ensemble (1) de corps d'étrier (2) et de plaquettes de frein (3, 4), dans lequel
le corps d'étrier (2) comprend deux logements (5, 6) se faisant face, qui reçoivent lesdites deux plaquettes de frein (3, 4) de sorte que, lorsque le corps d'étrier (2) est placé à cheval sur une bande de freinage (7) d'un disque de frein (8), ladite bande de freinage (7) comprenant des surfaces de freinage opposées (9, 10), lesdites plaquettes de frein (3, 4) font face auxdites surfaces de freinage opposées (9, 10) de ladite bande de freinage (7) ;
et dans lequel
ledit corps d'étrier (2) comprend un premier et un second élément allongé (201, 202), qui, lorsque le corps d'étrier (2) est placé à cheval sur la bande de freinage (7), font face auxdites surfaces de freinage opposées (9, 10) ;
et dans lequel
ledit corps d'étrier (2) comprend au moins un pont central (203) qui relie lesdits premier et second éléments allongés (201, 202) en traversant lesdits deux logements (5, 6) ;
dans lequel
ledit disque de frein (8) comprend un axe de rotation (X-X), qui définit une direction axiale (A-A), coïncidant avec ou parallèle audit axe de rotation (X-X), une direction radiale (R-R) orthogonale audit axe de rotation (X-X), et une direction circonférentielle (C-C) orthogonale à ladite direction axiale (A-A) et à ladite direction radiale (R-R) ;
chacune desdites plaquettes de frein (3, 4) comprend une plaque de support (11, 12) adaptée pour supporter un matériau de friction (13, 14) et pour supporter la plaquette de frein (3, 4) au niveau dudit corps d'étrier (2) et dans lequel
ledit matériau de friction (13, 14) comprend une extension radiale prédéterminée (MAR) ;
chaque plaque de support (11, 12) comprend une surface de poussée (15), une surface de support de matériau de friction opposée (16), et un bord de plaque de support (17), qui relie ladite surface de poussée (15) à ladite surface de support de matériau de friction opposée (16) ;
et dans lequel
ledit bord de plaque de support (17) comprend une partie de bord supérieure (18) faisant face au côté opposé par rapport audit axe de rotation (X-X) ;
et dans lequel
chaque plaque de support (11, 12) comprend au moins une protubérance (19, 20) faisant saillie de ladite partie de bord supérieure (18) dudit bord de plaque de support (17) et est en forme de crochet définissant une surface de coulissement de plaque (21) ;
dans lequel ladite surface de coulissement de plaque (21) fait face sensiblement audit axe de rotation (X-X) de manière indirecte ;
chaque plaque de support (11, 12) comprend au moins une surface de support de plaquette (22) agencée de manière sensiblement orthogonale à ladite direction circonférentielle (C-C) ;
dans lequel ladite surface de support de plaquette (22) s'étend sur au moins la moitié de l'extension radiale prédéterminée (MAR) dudit matériau de friction (13, 14) ;
et dans lequel
ledit au moins un pont central (203) du corps d'étrier (2) comprend au moins deux protubérances de pont central (23) formant au moins deux surfaces de coulissement de corps d'étrier (24) qui, lorsque les plaquettes de frein (3, 4) sont montées dans ledit corps d'étrier (2), font face auxdites surfaces de coulissement de plaque (21) ;
et l'ensemble (1) étant **caractérisé en ce que**
ledit corps d'étrier (2) comprend au moins deux surfaces de support d'étrier (25, 26) qui, lorsque les plaquettes de frein (3, 4) sont montées dans ledit corps d'étrier (2), font face auxdites surfaces de support de plaquette (22) ;
lesdites au moins deux protubérances de pont central (23) sont séparées l'une de l'autre par au moins une fenêtre de pont central (27) qui permet à au moins une partie de ladite au moins une protubérance de plaque (19, 20) de passer afin de permettre le montage de chacune desdites au moins deux plaques de support (11, 12) dans ledit corps d'étrier (2) en amenant ladite surface de coulissement de plaque (21) à faire face à l'une desdites surfaces de coulissement de corps d'étrier (24) et en amenant ladite surface de support de plaquette (22) à faire face à l'une desdites surfaces de support d'étrier (25, 26).

2. Ensemble (1) selon la revendication 1, dans lequel ladite surface de coulissement de plaque (21) fait face à ladite partie de bord supérieure (18) du bord de la plaque de support (17) ; ou dans lequel ladite surface de coulissement de plaque (21) est agencée en contre-dépouille par rapport à ladite protubérance de support de plaque (19, 20).

3. Ensemble (1) selon l'une quelconque des revendications précédentes, dans lequel ladite au moins une protubérance de plaque de support (19, 20) est placée radialement à l'extérieur du matériau de friction de plaquette (13, 14) sur le côté opposé par rapport à l'axe de rotation (X-X) lorsque le corps d'étrier (2) est monté à cheval sur la bande de freinage (7).

4. Ensemble (1) selon l'une quelconque des revendications précédentes, dans lequel ladite au moins une surface de support de plaquette (22) s'étend dans la direction radiale et s'étend au moins autant que ledit matériau de friction avec l'extension radiale prédéterminée du matériau de friction (MAR).

5. Ensemble (1) selon l'une quelconque des revendications précédentes, dans lequel lesdites surfaces de support d'étrier sont au moins deux surfaces de support d'étrier (24, 25) et sont agencées sur des côtés opposés, une pour chaque élément allongé (201, 202).

6. Ensemble (1) selon l'une quelconque des revendications précédentes, dans lequel ledit corps d'étrier (2) est un corps monobloc ; ou dans lequel ledit corps d'étrier (2) est réalisé en deux parties ; ou dans lequel ledit pont central (203) du corps d'étrier est un corps unique avec lesdits premier et second éléments allongés (201, 202) du corps d'étrier.

7. Ensemble (1) selon l'une quelconque des revendications précédentes, dans lequel deux protubérances de plaque de support (19, 20) sont prévues pour chaque plaque de support (11, 12) ; ou dans lequel deux protubérances de plaque de support (19, 20) sont prévues pour chaque plaque de support (11, 12), et ces deux protubérances de plaque de support (19, 20) se font face ou sont agencées de manière mutuellement spéculaire.

8. Ensemble (1) selon l'une quelconque des revendications précédentes, dans lequel ledit pont central (203) comprend quatre protubérances de pont central (23), agencées par paires depuis des orientations opposées du pont central (203).

9. Ensemble (1) selon l'une quelconque des revendications précédentes, dans lequel ladite surface de support d'étrier (25, 26) consiste en au moins deux surfaces de support d'étrier (25, 26) chacune placée pour délimiter un logement de corps d'étrier (5, 6) pour loger la plaquette de frein respective (3, 4), délimitant ledit logement de corps d'étrier (5, 6) qui permet à la plaquette de venir en butée contre le corps d'étrier (2) pendant une action de freinage.

10. Ensemble (1) selon l'une quelconque des revendications précédentes, dans lequel ladite au moins une surface de support de plaquette (22) consiste en deux surfaces de support de plaquette opposées (22) pour permettre à la plaquette de frein (3, 4) de venir en butée contre le corps d'étrier (2) pendant une action de freinage en marche avant et en marche arrière du véhicule qui comporte ledit corps d'étrier (2).

11. Ensemble (1) selon l'une quelconque des revendications précédentes, dans lequel ledit ensemble (1) comprend en outre au moins un ressort à lame (28) conformé pour être agencé à cheval sur le disque de frein (8) pour appliquer une action élastique à au moins une desdites plaquettes de frein (3, 4) pour la solliciter à l'écart dudit disque de frein (8) ; dans lequel ladite au moins une plaquette de frein (3, 4) comprend ladite plaque de support (11, 12), qui supporte ledit matériau de friction (13, 14), ladite plaque de support (11, 12) comprend ledit bord de plaque (17) qui forme au moins une partie de poussée (29) ; ledit ressort à lame (28) comprend un corps de ressort en forme de bande (30) ; ledit ressort à lame (28) comprend au moins deux parties de ressort (31, 32) dont au moins deux sont mutuellement distinctes, à savoir une première partie d'accouplement (31) adaptée pour accoupler ledit ressort à lame (28) au corps d'étrier (2) ; une seconde partie de poussée (32) adaptée pour appliquer ladite action élastique à ladite partie de poussée (29) de ladite au moins une plaquette de frein (3, 4) en sollicitant ladite plaquette de frein (3, 4) au moins à l'écart dudit disque de frein (8) dans une direction axiale (A-A) et une direction radiale (R-R).

12. Ensemble (1) selon la revendication précédente, dans lequel au moins un ressort à lame (28) comprend une première bande de corps de ressort (33) comprenant une première partie de connexion (34) à partir de laquelle s'éloignent deux premiers bras de ressort (35) ; et dans lequel une seconde bande de corps de ressort (36) comprenant une seconde partie de connexion (37) à partir de laquelle s'éloignent deux seconds bras de ressort (38) ; et dans lequel ladite première partie de connexion (34) de ladite première bande de corps de ressort (33) est connectée à ladite seconde partie de connexion (37) de ladite seconde bande de corps de ressort (36) pour agencer lesdits deux premiers bras de ressort (35) orthogonalement auxdits deux seconds bras de ressort (38).

13. Ensemble (1) selon la revendication 11 ou 12, dans lequel ladite première partie d'accouplement (31) est conformée de manière à être accouplée par encliquetage audit corps d'étrier (2) ; et/ou dans lequel ladite première partie d'accouplement (31) est conformée en formant une fenêtre traversante de la première partie d'accouplement (39) ; ou dans lequel ladite première partie d'accouplement (31) est conformée en formant des bras indépendants (40) faisant saillie en porte-à-faux lorsque le ressort à lame (28) n'est pas monté sur le corps d'étrier (2).

14. Ensemble (1) selon la revendication 11, 12 ou 13, dans lequel ladite seconde partie de poussée (32), lorsqu'elle repose sur ladite au moins une plaquette (3, 4) en conditions de fonctionnement, est agencée pour être inclinée par rapport à ladite direction axiale (A-A) ainsi que par rapport à ladite direction radiale (R-R), formant un angle prédéterminé (A1) entre ladite seconde partie de poussée (32) et ladite direction axiale (A-A) et formant un angle prédéterminé (A2) entre ladite seconde partie de poussée (32) et ladite direction radiale (R-R).

15. Ensemble (1) selon l'une quelconque des revendications 11 à 14, dans lequel ledit ressort à lame consiste en deux ressorts à lame (28) placés de part et d'autre du pont central (203).

16. Un procédé de montage d'une plaquette de frein (3, 4) sur un corps d'étrier (2), comprenant les étapes suivantes :
fournir un ensemble (1) selon l'une quelconque des revendications 1 à 15 ;
insérer sensiblement dans la direction radiale (R-R) la plaquette de frein (3, 4) dans le corps d'étrier (2) du côté opposé au pont central (203), en alignant l'au moins une protubérance de plaque (19, 20) avec la fenêtre de pont central (27), de sorte que la protubérance de plaque (19, 20) passe radialement au-delà des protubérances de pont central (23) ;
faire coulisser la plaquette de frein (3, 4) dans la direction axiale (A-A) en l'insérant dans le logement respectif du corps d'étrier (5, 6), de sorte que sa surface de poussée de plaque (15) fasse face au corps d'étrier et que l'au moins une surface de coulissement de plaque (21) fasse face à la surface de coulissement du corps d'étrier (24) et que l'au moins une surface de support de plaquette (22) fasse face à l'au moins une surface de support d'étrier (25, 26).

17. Un procédé selon la revendication 16, comprenant les étapes supplémentaires consistant à :
fournir un ressort à lame (28) selon l'une quelconque des revendications 11 à 15 ;
insérer ledit ressort à lame (28) en accouplant par encliquetage ladite première partie d'accouplement (31) audit corps d'étrier (2) et en supportant ladite seconde partie de poussée (32) sur ladite partie de poussée (29) du bord de la plaque.
